# EUROPEAN PATENT SPECIFICATION

(11) **EP 2 972 177 B1**
(45) Date of publication and mention of the grant of the patent: **26.12.2018**
(21) Application number: 14764320.9
(22) Date of filing: 14.03.2014
(51) Int. Cl.: G01M 17/00

(54) **ELECTRONIC DETECTION OF ENGINE MALFUNCTION**
ELEKTRONISCHER NACHWEIS EINER MOTORFEHLFUNKTION
DÉTECTION ÉLECTRONIQUE DE DYSFONCTIONNEMENT MOTEUR

(30) Priority: 15.03.2013 US 201313835178
(43) Date of publication of application: 20.01.2016
(73) Proprietor: Allison Transmission, Inc., Indianapolis, IN 46222 (US)
(72) Inventor: SHAFFER, Mark, Brownsburg, Indiana 46112 (US); BITNER, John, Arlington, Indiana 46104 (US)
(74) Representative: Burton, Nick
(86) International application number: PCT/US2014/028852
(87) International publication number: WO 2014/144440

(56) References cited:
- EP-A2- 0 715 160
- WO-A2-00/22404
- WO-A2-2012/146945
- DE-A1-102005 053 457
- JP-A- 2008 240 627
- US-A1- 2006 101 902
- US-B1- 6 434 512
- Jeffrey K Ball ET AL: "Torque Estimation and Misfire Detection using Block Angular Acceleration", SAE Technical Paper 2000-01-0560, 6 March 2000 (2000-03-06), XP055301824, DOI: 10.4271/2000-01-0560 Retrieved from the Internet: URL:http://www.usafa.edu/df/dfem/research_ info/auto_tech/2000-01-0560.pdf [retrieved on 2016-09-12]

## Description

### CROSS REFERENCE TO RELATED U.S. APPLICATIONS

This application claims priority to and the benefit of U.S. Patent Application Serial No. 13/835,178 entitled "ELECTRONIC DETECTION OF ENGINE MALFUNCTION," which was filed on March 15, 2013.

### TECHNICAL BACKGROUND

The present disclosure relates, generally, to techniques for detecting engine malfunction, and more specifically, to electronic devices for detecting engine misfire events.

### BACKGROUND

Transmissions are used to transfer a drive torque from a drive unit to a load. For example, in vehicular applications, a vehicle transmission transfers the drive torque from the vehicle engine to the vehicle load. Some transmissions include a finite set of gears, which may be selected to produce a specific transmission ratio. To do so, the transmissions may include one or more clutches, which may be engaged to select one or more gear sets to produce the required transmission ratio.

In automatic transmissions, the operation of the transmission may be controlled by a transmission control module (TCM), which is often embodied as an electronic circuit. The transmission control module may select, for example, one or more gear sets by causing engagement of the corresponding clutches. Similarly, the operation of the vehicle's engine may be controlled by an engine control module (ECM). In some vehicles, the transmission control module and the engine control module may be combined into, or otherwise included in, a powertrain control module (PCM). In this way, the transmission control module and the engine control module (or powertrain control module) operate together to control and monitor the operation of the vehicle's powertrain.

In some circumstances, improper operation of a vehicle's engine can result in undesirable and/or unexpected operation of a vehicle's transmission. Such situations can be exacerbated by operation of the vehicle's engine control module and/or transmission control module as the modules attempt to compensate for engine malfunction. In severe cases, engine malfunction, such as engine misfire, can result in physical damage to the transmission and/or other components of a vehicle's drive train.

JP 2008 240627 describes a knocking determining device, which determines the existence of a knocking occurrence by processing the detecting signal from a vibration sensor arranged in an engine, and is constituted for determining knocking by removing a vibration component except for the knocking by determining that the vibration component except for the knocking is superimposed, when an RMS value of the largest number area is larger than a predetermined reference value and its distribution width is within a predetermined range.

EP 0 715 160 relates to a detonation indication system for an internal combustion piston engine of an aircraft, which senses detonation by means of a sensor comprising a piezoelectric force transducer installed under a the spark plug of each cylinder of the engine. The transducer produces an on-going combustion pressure-induced charge signal which is converted into a voltage signal by a charge converter. A comparator gating circuit removes, from the voltage signal, signal components, associated with intake and exhaust strokes, which occur below a predetermined combustion pressure. A high-pass frequency filter then removes signal components associated with low frequency changes in combustion pressure. The output from the filter is applied to an RMS-to-direct current converter which converts the output into a direct current voltage proportional to the RMS value of the filter output. The output from the converter is applied to peak and hold circuitry which holds the peak value of the converter output corresponding to the most severe detonation event which occurs during an adjustable reset time period. A digital display is provided which receives signals from the circuit corresponding to the peak values occurring during successive reset periods and provides a numerical read-out indicative of the severity of the associated detonation events.

DE 10 2005 053457 describes that an appropriate pressure has to be applied between the components of a constant velocity transmission unit, preventing slip as well as stress. The rotation speed of the input, respectively the output shaft, is detected by a sensor communicating with an evaluating device and other related units. The pressure is adjusted and the change checked during the process. The data obtained are evaluated using a filtering method and a transmission value is determined as a result.

US 2006/101902 describes a method of detecting an engine malfunction such as a misfire includes determining engine speed values at each of a plurality of measurement angular positions, heterodyning the engine speed values with sine and cosine functions indexed in the angular domain, passing the heterodyned results through a low pass filter, and computing the resulting magnitude from the resulting two vectors. An apparatus for detecting an engine malfunction, such as a misfire, includes an engine speed analyzer, a multiplier, and a low pass filter.

Jeffrey K Ball ET AL, "Torque Estimation and Misfire Detection using Block Angular Acceleration", SAE Technical Paper 2000-01-0560, URL: http://www.usafa.edu/df/dfem/research_info/auto_tech/2000-01-0560.pdf, examines the possibility of detecting misfires via measurements of the angular acceleration of the engine block. Measurements were taken on a production 4-cylinder engine which was modeled as a single degree of freedom torsional oscillator. The torque waveform was estimated and compared to the torque calculated via cylinder pressure measurements. Further analysis was conducted in the frequency domain. Results indicate that metrics based on low frequency information were most reliable, but this is impractical for vehicular applications. The accuracy of high frequency metrics was degraded due to the limitations of the model and the non-rigid behavior of the block at high engine speeds.

### SUMMARY

The invention is defined in the accompanying claims.

According to an aspect of the invention, there is provided a diagnostic circuit to detect malfunctioning of an engine of a vehicle, the diagnostic circuit comprising:
a filter circuit to receive an operation signal from a powertrain sensor of the vehicle and generate a filtered signal, wherein the filter circuit comprises an eighth order Butterworth band-pass filter having a high cutoff frequency of about 35 Hertz and a low cutoff frequency of about 5 Hertz;
an alternating current-to-direct current converter to convert the filtered signal to a direct current filtered signal; and
a peak detection circuit to detect a signal peak of the direct current filtered signal and generate a trigger signal in response to a determination that the detected signal peak is greater than a reference threshold.

In some embodiments, the operation signal may be embodied as an angular velocity signal. For example, the angular velocity signal may include an angular velocity signal indicative of an angular velocity of a flywheel of the engine. In some embodiments, the angular velocity signal may be embodied as an angular velocity signal indicative of an angular velocity of the flywheel of the engine while the engine operates at an engine speed of between 1,500 revolutions-per-minute to 2,000 revolutions-per-minute.

In some embodiments, the alternating current-to-direct current converter may include a true root-mean-square converter. Additionally, in some embodiments, the diagnostic circuit may further include an alarm configured for activation in response to receipt of the trigger signal. In some embodiments, the diagnostic circuit may also include a data storage to receive and store one of the detected peak signal or the trigger signal.

According to another aspect of the invention, there is provided a method for detecting malfunctioning of an engine of a vehicle, the method comprising:
receiving, with a diagnostic circuit, an operation signal from an angular velocity sensor of the vehicle;
filtering, with the diagnostic circuit, the operation signal to generate a filtered signal, wherein filtering the operation signal comprises filtering the operation signal using an eighth order Butterworth band-pass filter having a high cutoff frequency of about 35 Hertz and a low cutoff frequency of about 5 Hertz;
converting, with the diagnostic circuit, the generated filtered signal to a direct current filtered signal; and
determining, with the diagnostic circuit, whether a malfunctioning event is occurring in the engine based on a comparison of a signal peak of the direct current filtered signal to a reference threshold and generating a trigger signal in response to a determination that the signal peak is greater than the reference threshold.

In some embodiments, receiving the operation signal may include receiving an angular velocity indicative of an angular velocity of a flywheel of an engine of the vehicle operating at an engine speed of between 1,500 revolutions-per-minute to 2,000 revolutions-per-minute. Further, in some embodiments, converting the generated filtered signal may include converting the generated filtered signal using a true root-mean-square alternating current-to-direct current converter. The method may also include activating an alarm in response to determining that a malfunctioning event is occurring. Additionally, in some embodiments, determining whether a malfunction event may include occurring comprises determining whether the engine is misfiring.

A vehicle may include an angular velocity sensor to generate an operation signal indicative of an angular velocity of a flywheel of an engine of the vehicle and a diagnostic circuit to receive the operation signal. The diagnostic circuit may include (i) a band-pass filter
to filter the operation signal to generate a filtered signal, (ii) an alternating current-to-direct current converter to convert the filtered signal to a direct current filter signal, and (iii) a peak detection circuit to detect a signal peak of the direct current filtered signal and generate a trigger signal in response to a determination that the detected signal peak is greater than a reference threshold.

The vehicle may also include an alarm circuit to receive the trigger signal and generate an alarm in response to the trigger signal. Additionally, the band-pass filter may have a high cutoff frequency of about 35 Hertz and a low cutoff frequency of about 5 Hertz. Further, the
operation signal may be indicative of an angular velocity of the flywheel of the engine while the engine operates at about 1,500 revolutions-per-minute.

### BRIEF DESCRIPTION OF THE DRAWINGS

The invention described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements.
FIG. 1 is a simplified block diagram of at least one embodiment of a system for detecting engine malfunction of a vehicle;
FIG. 2 is a simplified block diagram of a diagnostic circuit of the system of FIG. 1;
FIG. 3 is a simplified flow diagram of at least one embodiment of a method for detecting engine malfunction that may be executed by the diagnostic circuit of FIG. 2;
FIG. 4 is a simplified graph of the frequency response of a non-malfunctioning engine;
FIG. 5 is a simplified graph of the frequency response of a malfunctioning engine;
FIG. 6 is a simplified graph of the frequency response of a filter of the diagnostic circuit of FIG. 2; and
FIG. 7 is a simplified graph of the frequency response of a malfunction engine after application of the filter of FIG.6.

### DETAILED DESCRIPTION OF THE DRAWINGS

While the concepts of the present disclosure are susceptible to various modifications and alternative forms, specific exemplary embodiments thereof have been shown by way of example in the drawings and will herein be described in detail. It should be understood, however, that there is no intent to limit the concepts of the present disclosure to the particular forms disclosed, but on the contrary, the intention is to cover all modifications, equivalents, and alternatives consistent with the appended claims.

In the following description, numerous specific details such as logic implementations, opcodes, means to specify operands, resource partitioning/sharing/duplication implementations, types and interrelationships of system components, and logic partitioning/integration choices are set forth in order to provide a more thorough understanding of the present disclosure. It will be appreciated, however, by one skilled in the art that embodiments of the disclosure may be practiced without such specific details. In other instances, control structures, gate level circuits and full software instruction sequences have not been shown in detail in order not to obscure the invention. Those of ordinary skill in the art, with the included descriptions, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

Embodiments of the invention may be implemented in hardware, firmware, software, or any combination thereof. Embodiments of the invention implemented in a computer system may include one or more bus-based interconnects or links between components and/or one or more point-to-point interconnects between components. Embodiments of the invention may also be implemented as instructions carried by or stored on a transitory or non-transitory machine-readable medium, which may be read and executed by one or more processors. A machine-readable medium may be embodied as any device, mechanism, or physical structure for storing or transmitting information in a form readable by a machine (e.g., a computing device). For example, a machine-readable medium may be embodied as read only memory (ROM); random access memory (RAM); magnetic disk storage media; optical storage media; flash memory devices; mini- or micro-SD cards, memory sticks, electrical signals, and others.

In the drawings, specific arrangements or orderings of schematic elements, such as those representing devices, modules, instruction blocks and data elements, may be shown for ease of description. However, it should be understood by those skilled in the art that the specific ordering or arrangement of the schematic elements in the drawings is not meant to imply that a particular order or sequence of processing, or separation of processes, is required. Further, the inclusion of a schematic element in a drawing is not meant to imply that such element is required in all embodiments or that the features represented by such element may not be included in or combined with other elements in some embodiments.

In general, schematic elements used to represent instruction blocks may be implemented using any suitable form of machine-readable instruction, such as software or firmware applications, programs, functions, modules, routines, processes, procedures, plug-ins, applets, widgets, code fragments and/or others, and that each such instruction may be implemented using any suitable programming language, library, application programming interface (API), and/or other software development tools. For example, some embodiments may be implemented using Java, C++, and/or other programming languages. Similarly, schematic elements used to represent data or information may be implemented using any suitable electronic arrangement or structure, such as a register, data store, table, record, array, index, hash, map, tree, list, graph, file (of any file type), folder, directory, database, and/or others.

Further, in the drawings, where connecting elements, such as solid or dashed lines or arrows, are used to illustrate a connection, relationship or association between or among two or more other schematic elements, the absence of any such connecting elements is not meant to imply that no connection, relationship or association can exist. In other words, some connections, relationships or associations between elements may not be shown in the drawings so as not to obscure the disclosure. In addition, for ease of illustration, a single connecting element may be used to represent multiple connections, relationships or associations between elements. For example, where a connecting element represents a communication of signals, data or instructions, it should be understood by those skilled in the art that such element may represent one or multiple signal paths (e.g., a bus), as may be needed, to effect the communication.

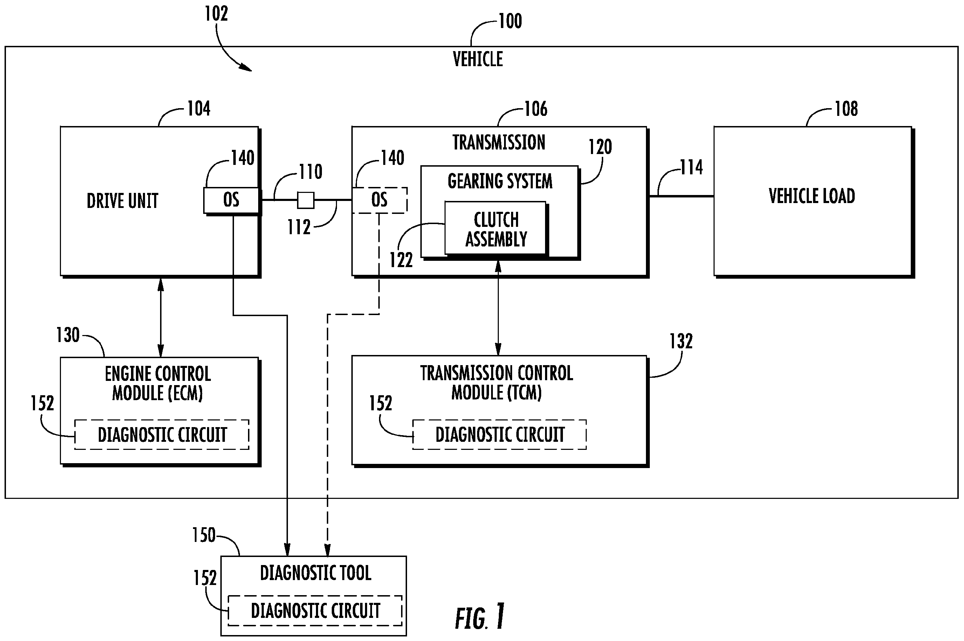

Referring now to FIG. 1, in the illustrative embodiment, a vehicle 100 includes a drive train 102. The drive train 102 includes a drive unit 104, a transmission 106, and a vehicle load 108, which is driven by the transmission 106. The drive unit 104 is illustratively embodied as a four stroke diesel internal combustion engine. However, in other embodiments, the drive unit 104 may be embodied as a spark-ignition type internal combustion engine (i.e. gasoline engine), a hybrid engine-electric motor combination, or another source of rotational power. The drive unit 104 includes a drive unit output shaft 110 that provides rotational power to the transmission 106 via an input shaft 112 of the transmission. The transmission 106 also includes an output shaft 114 that provides rotational power to the vehicle load 108 when the transmission 108 is engaged (i.e., is in a forward or reverse gear).

The transmission 106 is illustratively embodied as an automatic transmission and is operable to transmit the rotational power from the drive unit 104 to the vehicle load 108 at various transmission ratios. The transmission ratio provided by the transmission 106 is selected based on a gearing system 120. In the illustrative embodiment, the gearing system 120 is embodied as a planetary gearing system, but other gearing system configurations may be used in other embodiments. The gearing system 120 includes a plurality of gear sets, which may be engaged to select a desired transmission ratio. Depending on the type of transmission one, two, or more gear sets may be engaged to achieve the desired transmission ratio. The gear sets of the gearing system 120 are engaged via use of a clutch assembly 122 of the transmission 106. The clutch assembly 122 includes a plurality of clutches that may be applied to engage one or more gear sets. The specific number of gear sets of the gearing system 120 and clutches of the clutch assembly 122 may depend on the type of transmission 106, the number of operational modes/ranges, and/or criteria. For example, in some eight-speed transmissions, the gearing system may include four planetary gear sets and five clutches (e.g., C1, C2, C3, C4, and C5), which may be applied individually or in sets to select one or more of the gear sets.

The illustrative vehicle 100 also includes an engine control module (ECM) 130 and a transmission control module 132. The engine control module 130 may be embodied as any type of engine control module capable of performing the functions described herein. The engine control module 130 may include components typically found in an engine control module such as a processor, memory, input/output devices, and/or other components and/or circuits, which are not illustrated in FIG. 1 for clarity of the description. Illustratively, the engine control module receives various operation signals from sensors of the drive unit 104 and/or the transmission 106 and controls the operation of the drive unit 104 based on such operation signal and/ or other criteria.

Similarly, the transmission control module 132 may be embodied as any type of transmission control module capable of performing the functions described herein. The transmission control module 132 may include components typically found in a transmission control module such as a processor, memory, input/output devices, and/or other components and/or circuits, which are not illustrated in FIG. 1 for clarity of the description. Illustratively, the transmission control module receives various operation signals from sensors of the transmission 106, the drive unit 104, and/or the engine control module 130 controls the operation of the transmission (e.g., operation of the clutch assembly 122) based on such operation signal and/ or other criteria. In some embodiments, the transmission control module 132 may be incorporated in a powertrain control module (PCM) along with the engine control module 130.

The vehicle 100 also includes an operation sensor 140 configured to generate an operation signal indicative of an operation condition of the powertrain of the vehicle 100. For example, the operation sensor 140 may be included in the drive unit 104 and configured to generate an operation signal indicative of an operation condition of the drive unit 104. In the illustrative embodiment, the operation sensor 140 is embodied as an angular velocity sensor positioned and configured to generate an angular velocity signal indicative of an angular velocity of a flywheel (not shown) of the drive unit 104. For example, the operation sensor 140 may be operatively coupled to the output shaft 110 of the drive unit 104 to generate an angular velocity signal indicative of the angular velocity of the output shaft 110, which is indicative of the angular velocity of the flywheel of the drive unit 104.

Additionally or alternatively, in some embodiments, the operation sensor 140 may be included in the transmission 106. In such embodiments, the operation sensor 140 generates an operation signal indicative of an operation condition of the transmission 106. For example, the operation sensor 140 may be embodied as an angular velocity sensor positioned and configured to generate an angular velocity signal indicative of the angular velocity of the input shaft 112 of the transmission 106 (e.g., the turbine speed of the transmission 106), which is indicative of the angular velocity of the flywheel of the drive unit 104 due to the locked connection of the output shaft 110 of the drive unit 104 and the input shaft 112 of the transmission 106. In still other embodiments, the operation sensor 140 may be included in other components of the vehicle 100.

The output of the operation sensor 140 is received by a diagnostic tool 150, which includes a diagnostic circuit 152. In some embodiments, the diagnostic tool 150 may be included in the vehicle 100. Alternatively, in other embodiments, the diagnostic tool 150 may be separate from the vehicle 100. For example, the diagnostic tool 150 may be embodied as a handheld electronic diagnostic tool usable by a vehicle technician. As discussed in more detail below, the diagnostic circuit 152 is configured to determine an operating condition of the drive unit 104 based on the operation signal received from the operation sensor 140.

Specifically, in the illustrative embodiment, the diagnostic circuit 152 is configured to determine whether the drive unit 104 is malfunctioning such as, for example, exhibiting a cylinder misfire. Malfunction of the drive unit 104 (e.g., misfire) can result in damage to the transmission 132. Additionally, a malfunctioning drive unit 104 may cause the engine control module 130 and/or the transmission control module 132 to respond to the malfunction event by controlling the drive unit 104 in such a way that exacerbates the malfunctioning event. For example, an engine misfire may cause the transmission 106 to operate in an undesirable manner (e.g., missing shift points, shifting "hard," etc.), which may be detectable by a driver of the vehicle 100 and may damage the transmission 106 over time. Such engine misfire may be most noticeable when the drive unit 104 is operating near its peak torque curve (e.g., from about 1,500 revolutions-per-minute to about 2,000 revolutions-per-minute). In response to the engine misfiring event, a typical engine control module 130 may attempt to compensate for the engine misfire by adjusting the operation of the remaining "good" cylinders. Such compensation, however, may increase the undesirable operation of the transmission 106 and increase the likelihood of improper operation of the transmission 106.

As discussed in more detail below, the diagnostic circuit 152 is configured to detect the occurrence of such drive unit malfunction (e.g., engine misfire, defective engine control module 130, etc.) and generate a trigger signal, which may be used to activate an alarm, modify the functionality of the engine control module 130 and/or transmission control module 132, record operation parameters, and/or elicit other corrective or diagnostic responses. In some embodiments, the diagnostic circuit 152 may be included in the vehicle 100. For example, as shown in FIG. 1, the diagnostic circuit 152 may be included in the engine control module 130 and/or the transmission control module 132. In such embodiments, the diagnostic circuit 152 may provide feedback control signals to the engine control module 130 and/or the transmission control module 132 to adjust or modify the operation of the control modules 130, 132.

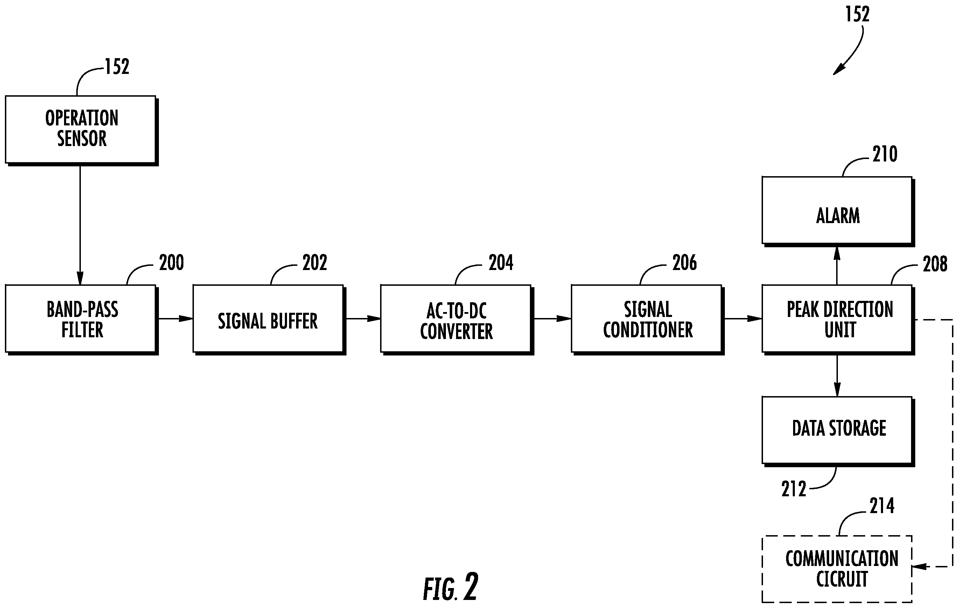

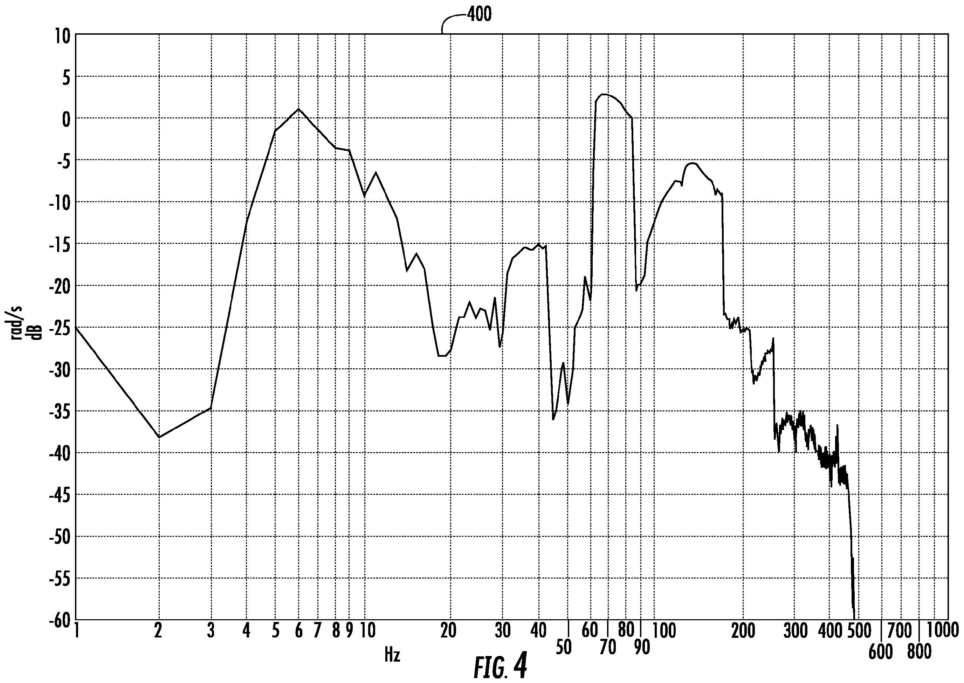

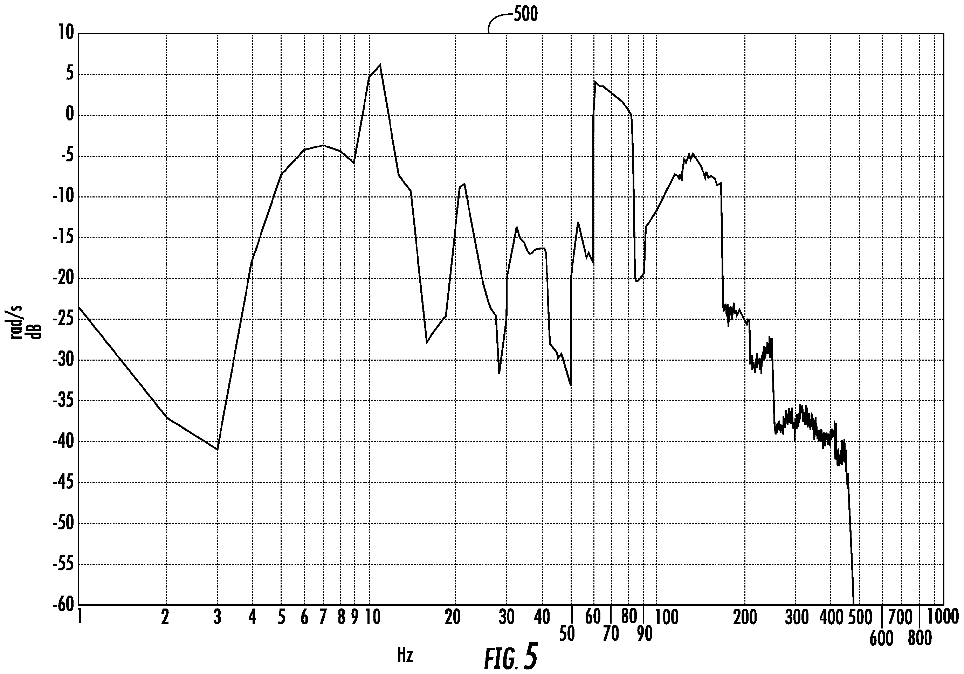

Referring now to FIG. 2, an embodiment of the diagnostic circuit 152 is shown. Illustratively, the diagnostic circuit 152 includes a filter 200, which receives the operation signal indicative of the angular velocity of the flywheel of the drive unit 104 from the operation sensor 140. The filter 200 filters the angular velocity signal to generate a filtered signal. It has been determined that abnormalities in the angular velocity signal at the low end of the frequency spectrum (e.g., lower than about 50 hertz) may be indicative of engine malfunction (e.g., engine misfire). For example, an illustrative frequency response 400 of an angular velocity signal from a non-malfunctioning engine operating at about 1,500 revolutions-per-minute (RPMs) is shown in FIG. 4. The frequency response 400 includes signal information throughout the frequency spectrum up to about 500 hertz with minimal outlier peaks. Conversely, as shown in the illustrative frequency response 500 of FIG. 5, the frequency response of an angular velocity signal from a malfunctioning engine (e.g., an engine experiencing engine misfire) operating at 1,500 RPMs include several signal peaks throughout the frequency response. In particular, a signal peak is shown around the 13 Hertz frequency. The existence of such peak signals may be indicative of the malfunctioning of the engine.

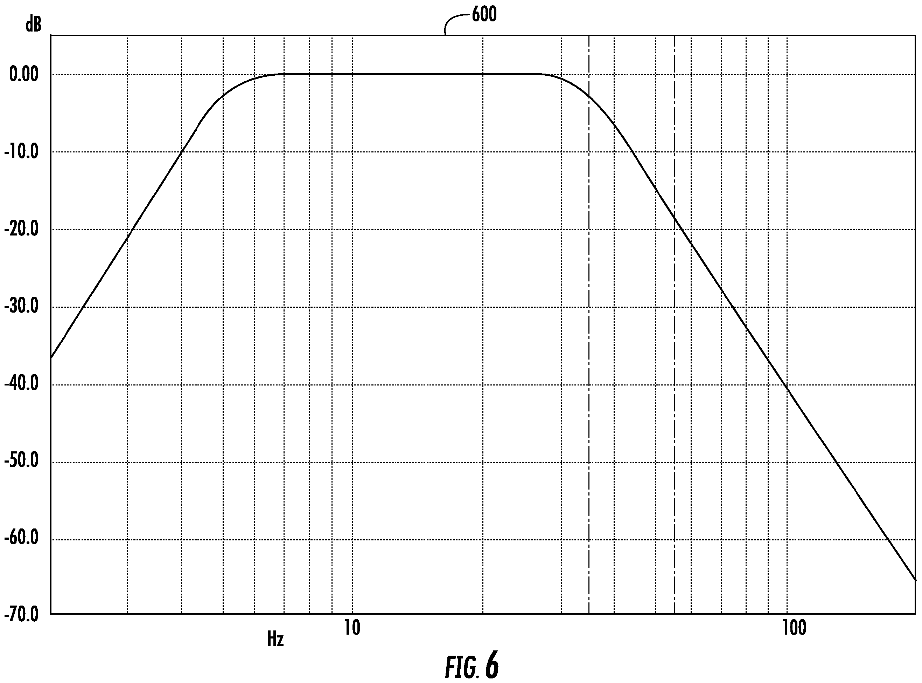

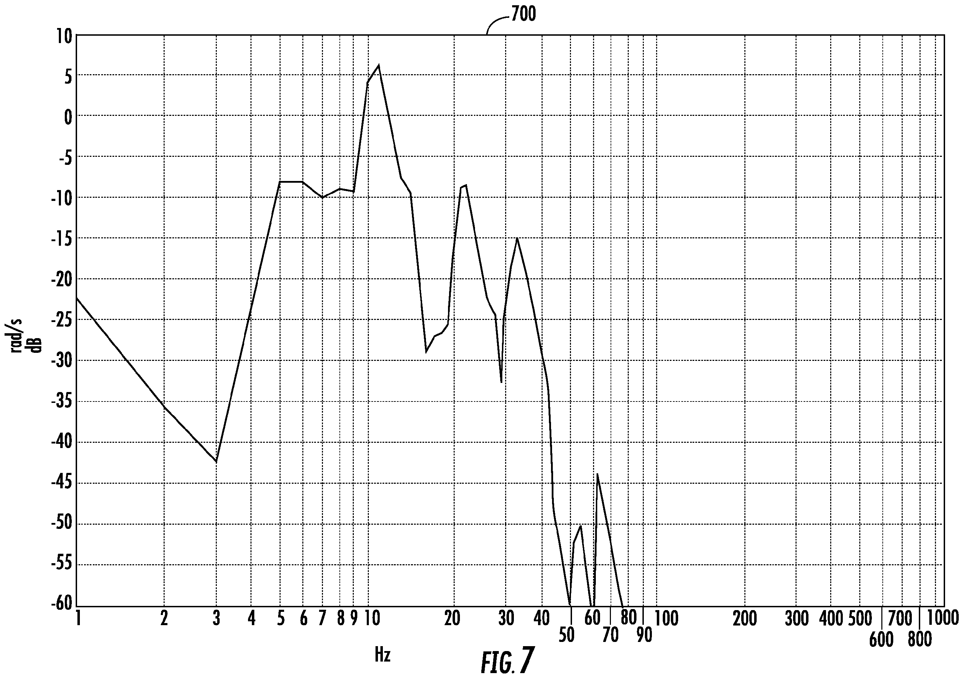

As such, the filter 200 filters the signal information of the operation signal that is not of interest (e.g., the high frequency response information). In an illustrative example useful for understanding the invention, the filter 200 is embodied as a band-pass filter. The band-pass filter 200 filters out the high end frequencies and very low end frequency of the angular velocity signal. In some examples useful for understanding the invention, the band-pass filter 200 may be embodied as, for example a Butterworth band-pass filter. According to the present invention, the band-pass filter 200 is embodied as an eighth order Butterworth band-pass filter having a high end cut-off (i.e., the -3 dB cutoff) of about 35 hertz and a low end cutoff of about 5 hertz. An illustrative frequency response 600 of such a Butterworth band-pass filter 200 is shown in FIG. 6. An illustrative filtered frequency response 700 of the angular velocity signal of FIG. 5 subsequent to filtering by the illustrative Butterworth band-pass filter 200 of FIG. 6 is shown in FIG. 7. As can be seen from FIG. 7, the filtered frequency response has a reduced amount of signal information above about 35 hertz and below about 5 hertz. However, the signal peak centered around about 13 hertz remains. Of course, other types of band-pass filters having other cut-off configurations may be used in other examples useful for understanding the invention. For example, in some examples useful for understanding the invention, band-pass filters of lower or higher order may be used. Additionally, in some examples useful for understanding the invention, the filter 200 may be embodied as a low-pass filter rather than a band-pass filter.

The filtered signal from the band-pass filter 200 is provided to a signal buffer circuit 202. The signal buffer circuit 202 may be embodied as one or more buffer amplifiers and/or other signal conditioning components. The buffered signal is subsequently provided to an alternating current-to-direct current (AC-DC) converter 204. The converter 204 converts the analog, buffered signal to a digital signal. The converter 204 may be embodied as any suitable converter capable of converting the buffered signal to a digital signal. In the illustrative embodiment, the converter 204 is embodied as a true root-mean-square (RMS) AC-DC converter, which generates a more accurate equivalent RMS signal of an analog input signal than other AC-DC converters. Of course, in other embodiments, other types of AC-DC converters may be used.

The converted signal generated by the AC-DC converter 204 is subsequently conditioned by a signal conditioner circuit 206. The signal conditioner circuit 206 may include any number of devices and circuits to condition the converted signal. For example, the signal conditioner circuit 206 may be embodied as one or more filers to reduce rectification artifacts in the converted signal, signal amplifiers, signal buffers, and/or other signal conditioning circuits.

In the illustrative embodiment, the signal conditioner circuit 206 conditions the converted signal for peak detection by a peak detection circuit 208. The peak detection circuit 208 may be embodied as any type of device and/or circuit capable of detecting the signal peaks of the of the condition signal generated by the signal conditioner circuit 206. In the illustrative embodiment, the peak detection circuit 208 compares the detected signal peaks to a reference threshold. If the detected signal peaks meet or exceed the reference threshold, a drive unit 104 malfunctioning event (e.g., engine misfire) is determined to have occurred. As such, the peak detection circuit 208, or other circuitry of the diagnostic circuit 152, may generate a trigger signal, which may be used to generate a response to the detected malfunctioning event. For example, in some embodiments, the diagnostic circuit 152 may include an alarm or alarm circuit 210. In such embodiments, the trigger signal may active the alarm 210, which may be embodied as a visual, audible, or tactile alarm. The alarm 210 may be embodied in the diagnostic circuit 152, in the diagnostic tool 150, or within the vehicle 100.

In some embodiments, the diagnostic circuit 152 or diagnostic tool 150 may include a data storage 212. The data storage may be embodied as any type of device or devices configured for the short-term or long-term storage of data such as, for example, memory devices and circuits, memory cards, hard disk drives, solid-state drives, or other data storage devices. in such embodiments, the data indicative of the detected signal peaks, the converted signal, and/or other data related to the functioning of the diagnostic circuit 152 and/or the detected operation of the drive unit 104 may be stored in the data storage 212. Additionally, in some embodiments, the such, the diagnostic circuit 152 may include a communication circuit 214. In such embodiments, the diagnostic circuit 152 may be configured to transmit the trigger signal, the detected signal peaks, the converted signal, and/or other data to other components of the vehicle 100 and/or other remote circuits. For example, in some embodiments, the diagnostic circuit 152 may be configured to communicate with the engine control module 130 and/or the transmission control module 132 to modify the operation of the modules 130, 132 in response to detecting a malfunction event of the drive unit 104.

In some embodiments, the various components of the diagnostic circuit 152 shown in FIG. 2 may be embodied as separate components. However, in other embodiments, some or all of the components may be embodied as a single component. For example, in some embodiments, the components of the diagnostic circuit 152 may be embodied as logical units or blocks of an integrated circuit, such as a signal processor, microcontroller, or other processing circuit.

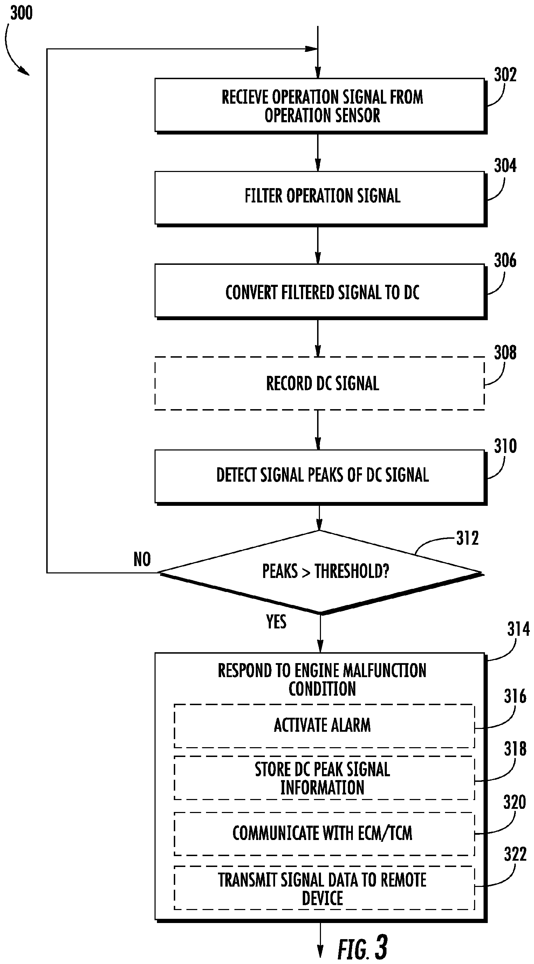

Referring now to FIG. 3, in use, the diagnostic circuit 152 may execute a method 300 for detecting malfunction of the drive unit 104. The method 300 begins with block 302 in which the operation signal from the operation sensor 140 is received. As discussed above, the operation signal is illustratively embodied as an angular velocity signal indicative of the instantaneous angular velocity of a flywheel (or output shaft 110) of the drive unit 104. In block 304, the operation signal is filtered using the filter 200. As discussed above, the filter 200 is illustrative embodied as a band-pass filter having a high end cut-off of about 35 hertz and a low end cutoff of about 5 hertz. The filtered operation signal is subsequently converted from an analog signal to a digital signal using the AC-DC converter 204 in block 306. As discussed above, in some embodiments, the AC-DC converter 204 may be embodied as a true RMS AC-DC converter.

In some embodiments, the converted DC signal may be stored in the data storage 212 in block 308. The stored DC signals may be subsequently used to perform long-term analysis of the operation of the engine, improve responsiveness of the engine control module 103 and/or transmission control module 132, and/or used for other purposes. In block 310, the signal peaks of the DC signal are detected. As discussed above, the peak detection circuit 208 may be used to detect the signal peaks of the filtered DC signal. In block 312, the diagnostic circuit 152 determines whether the detected signal peaks are greater than a reference threshold (e.g., having an amplitude greater than a reference amplitude amount), which may indicate an engine malfunction such as engine misfire as discussed above. If not, the method 300 loops back to block 302 to continue receiving operation signals from the operation sensor. However, if the detected signal peaks are determined to be greater than the reference threshold, the diagnostic circuit 152 may respond to the engine malfunction condition or event in block 314.

The diagnostic circuit 152 may respond to such malfunction condition in any suitable manner. For example, in some embodiments, the diagnostic circuit 152 may generate an alarm in block 316. As discussed above, the alarm may be embodied in the diagnostic circuit 152, in the engine control module 130, in the transmission control module 132, in the vehicle 100, and/or remote form the vehicle 100. Additionally, in some embodiments, the DC peak signal information may be stored in the data storage 212 in block 318 as discussed above.

In some embodiments, the diagnostic circuit 152 may be configured to communicate with the engine control module 130 and/or the transmission control module 132. For example, the diagnostic circuit 132 may transmit a trigger signal, the detected signal peaks, the converted signal, and/or other data or information to the modules 130, 132. In some embodiments, the diagnostic circuit 132 may be configured to communicate the modules 130, 132 in block 320 to modify or control the operation of the modules 130, 132 in response to detection of the malfunction event. Additionally, in some embodiments, the diagnostic circuit 152 may transmit signal data to remote devices. For example, the diagnostic circuit 152 may transmit the trigger signal, the detected signal peaks, the converted signal, and/or other data or information to a remote computer or other device for storage and/or analysis thereon. Such communications may be embodied as wired or wireless communications.

While the disclosure has been illustrated and described in detail in the drawings and foregoing description, such an illustration and description is to be considered as exemplary and not restrictive in character, it being understood that only illustrative embodiments have been shown and described and that all changes and modifications consistent with the recited claims are desired to be protected.

## Claims

1. A diagnostic circuit (152) to detect malfunctioning of an engine of a vehicle (100), the diagnostic circuit comprising:
a filter circuit (200) to receive (302) an operation signal from a powertrain sensor (140) of the vehicle and generate (304) a filtered signal;
an alternating current-to-direct current converter (204) to convert (306) the filtered signal to a direct current filtered signal; and
a peak detection circuit (208) to detect (310) a signal peak of the direct current filtered signal and generate a trigger signal in response to a determination (312) that the detected signal peak is greater than a reference threshold,
**characterised in that** the filter circuit comprises an eighth order Butterworth band-pass filter having a high cutoff frequency of about 35 Hertz and a low cutoff frequency of about 5 Hertz.

2. The diagnostic circuit of claim 1, wherein the operation signal comprises an angular velocity signal indicative of an angular velocity of a flywheel of the engine.

3. The diagnostic circuit of claim 2, wherein the angular velocity signal indicative of the angular velocity of the flywheel of the engine comprises an angular velocity signal indicative of an angular velocity of the flywheel of the engine while the engine operates at an engine speed of between 1,500 revolutions-per-minute to 2,000 revolutions-per-minute.

4. The diagnostic circuit of claim 1, wherein the alternating current-to-direct current converter comprises a true root-mean-square converter.

5. The diagnostic circuit of claim 1, further comprising an alarm configured for activation in response to receipt of the trigger signal.

6. The diagnostic circuit of claim 1, further comprising a communication circuit to transmit one of the detected peak signal or the trigger signal to a remote circuit.

7. A method (300) for detecting malfunctioning of an engine of a vehicle (100), the method comprising:
receiving (302), with a diagnostic circuit (152), an operation signal from an angular velocity sensor (140) of the vehicle;
filtering (304), with the diagnostic circuit, the operation signal to generate a filtered signal;
converting (306), with the diagnostic circuit, the generated filtered signal to a direct current filtered signal; and
determining, with the diagnostic circuit, whether a malfunctioning event is occurring in the engine based on a comparison of a signal peak of the direct current filtered signal to a reference threshold and generating a trigger signal in response to a determination (312) that the signal peak is greater than the reference threshold,
**characterised in that** filtering the operation signal comprises filtering the operation signal using an eighth order Butterworth band-pass filter having a high cutoff frequency of about 35 Hertz and a low cutoff frequency of about 5 Hertz.

8. The method of claim 7, wherein receiving the operation signal comprises receiving an angular velocity indicative of an angular velocity of a flywheel of an engine of the vehicle operating at an engine speed of between 1,500 revolutions-per-minute to 2,000 revolutions-per-minute.

9. The method of claim 7, wherein converting the generated filtered signal comprises converting the generated filtered signal using a true root-mean-square alternating current-to-direct current converter.

10. The method of claim 7, further comprising activating (316) an alarm in response to determining that a malfunctioning event is occurring.

11. The method of claim 7, wherein determining whether a malfunction event is occurring comprises determining whether the engine is misfiring.

## Patentansprüche

1. Diagnoseschaltung (152) zum Erfassen einer Störung eines Motors eines Fahrzeugs (100), wobei die Diagnoseschaltung umfasst:
eine Filterschaltung (200) zum Empfangen (302) eines Betriebssignals von einem Antriebsstrangsensor (140) des Fahrzeugs und zum Erzeugen (304) eines gefilterten Signals;
einen Wechselstrom-Gleichstromwandler (204) zum Umwandeln (306) des gefilterten Signals in ein gefiltertes Gleichstromsignal; und
eine Spitzen-Erfassungsschaltung (208), um eine Signalspitze des gefilterten Gleichstromsignals zu erfassen (310) und ein Auslösesignal in Reaktion auf eine Bestimmung (312) zu erzeugen, dass die erfasste Signalspitze größer als ein Referenzschwellenwert ist,
**dadurch gekennzeichnet, dass** die Filterschaltung ein Butterworth-Bandpassfilter achter Ordnung mit einer hohen Grenzfrequenz von etwa 35 Hertz und einer niedrigen Grenzfrequenz von etwa 5 Hertz aufweist.

2. Diagnoseschaltung nach Anspruch 1, wobei das Betriebssignal ein Winkelgeschwindigkeitssignal umfasst, das eine Winkelgeschwindigkeit eines Schwungrades des Motors anzeigt.

3. Diagnoseschaltung nach Anspruch 2, wobei das Winkelgeschwindigkeitssignal, das die Winkelgeschwindigkeit des Schwungrads des Motors anzeigt, ein Winkelgeschwindigkeitssignal umfasst, das die Winkelgeschwindigkeit des Schwungrads des Motors anzeigt, während der Motor mit einer Motordrehzahl zwischen 1.500 Umdrehungen pro Minute und 2.000 Umdrehungen pro Minute arbeitet.

4. Diagnoseschaltung nach Anspruch 1, wobei der Wechselstrom-Gleichstromwandler einen echten Effektivwertwandler umfasst.

5. Diagnoseschaltung nach Anspruch 1, ferner umfassend einen Alarm, der zur Aktivierung in Reaktion auf den Empfang des Auslösesignals eingerichtet ist.

6. Diagnoseschaltung nach Anspruch 1, ferner umfassend eine Kommunikationsschaltung zum Übertragen von einem der erfassten Signalspitze oder dem Auslösesignal an eine abseitige Schaltung.

7. Verfahren (300) zum Erfassen einer Störung eines Motors eines Fahrzeugs (100), wobei das Verfahren umfasst:
Empfangen (302) eines Betriebssignals von einem Winkelgeschwindigkeitssensor (140) des Fahrzeugs mit einer Diagnoseschaltung (152);
Filtern (304) des Betriebssignals zum Erzeugen eines gefilterten Signals mit der Diagnoseschaltung; .
Umwandeln (306) des erzeugten gefilterten Signals in ein gefiltertes Gleichstromsignal mit der Diagnoseschaltung; und
Bestimmen, ob ein Störungsereignis in dem Motor auftritt, mit der Diagnoseschaltung, basierend auf einem Vergleich einer Signalspitze des gefilterten Gleichstromsignals mit einem Referenzschwellwert und Erzeugen eines Auslösesignals in Reaktion auf ein Bestimmen (312), dass die Signalspitze größer ist als der Referenzschwellwert,
**dadurch gekennzeichnet, dass** das Filtern des Betriebssignals das Filtern des Betriebssignals unter Verwendung eines Butterworth-Bandpassfilters achter Ordnung mit einer hohen Grenzfrequenz von etwa 35 Hertz und einer niedrigen Grenzfrequenz von etwa 5 Hertz umfasst.

8. Verfahren nach Anspruch 7, wobei das Empfangen des Betriebssignals das Empfangen einer Winkelgeschwindigkeit umfasst, die eine Winkelgeschwindigkeit eines Schwungrades eines Motors des Fahrzeugs, der mit einer Motordrehzahl zwischen 1.500 Umdrehungen pro Minute und 2.000 Umdrehungen pro Minute arbeitet, anzeigt.

9. Verfahren nach Anspruch 7, wobei das Umwandeln des erzeugten gefilterten Signals Umwandeln des erzeugten gefilterten Signals mittels eines echten Effektivwert-Wechselstrom-Gleichstromwandlers umfasst.

10. Verfahren nach Anspruch 7, ferner umfassend Aktivieren (316) eines Alarms in Reaktion auf ein Bestimmen, dass ein Störungsereignis auftritt.

11. Verfahren nach Anspruch 7, wobei das Bestimmen, ob ein Störungsereignis auftritt, das Bestimmen umfasst, ob der Motor Fehlzündungen aufweist.

## Revendications

1. Circuit de diagnostic (152) pour détecter un dysfonctionnement d'un moteur d'un véhicule (100), le circuit de diagnostic comprenant :
un circuit de filtrage (200) pour recevoir (302) un signal de fonctionnement provenant d'un capteur de groupe motopropulseur (140) du véhicule et générer (304) un signal filtré ;
un convertisseur de courant alternatif en courant continu (204) pour convertir (306) le signal filtré en un signal filtré en courant continu ; et
un circuit de détection de crête (208) pour détecter (310) une crête de signal du signal filtré en courant continu et générer un signal de déclenchement en réponse à une détermination (312) du fait que la crête de signal détectée est supérieure à un seuil de référence,
**caractérisé en ce que** le circuit de filtrage comprend un filtre passe-bande Butterworth du huitième ordre ayant une fréquence de coupure élevée d'environ 35 Hertz et une fréquence de coupure basse d'environ 5 Hertz.

2. Circuit de diagnostic de la revendication 1, dans lequel le signal de fonctionnement comprend un signal de vitesse angulaire indiquant une vitesse angulaire d'un volant d'inertie du moteur.

3. Circuit de diagnostic de la revendication 2, dans lequel le signal de vitesse angulaire indiquant la vitesse angulaire du volant d'inertie du moteur comprend un signal de vitesse angulaire indiquant une vitesse angulaire du volant d'inertie du moteur tandis que le moteur fonctionne à un régime de moteur compris entre 1500 révolutions par minute et 2000 révolutions par minute.

4. Circuit de diagnostic de la revendication 1, dans lequel le convertisseur de courant alternatif en courant continu comprend un convertisseur à valeur efficace vraie.

5. Circuit de diagnostic de la revendication 1, comprenant en outre une alarme configurée pour être activée en réponse à la réception du signal de déclenchement.

6. Circuit de diagnostic de la revendication 1, comprenant en outre un circuit de communication pour transmettre l'un du signal de crête détecté et du signal de déclenchement à un circuit distant.

7. Procédé (300) pour détecter un dysfonctionnement d'un moteur d'un véhicule (100), le procédé comprenant le fait :
de recevoir (302), avec un circuit de diagnostic (152), un signal de fonctionnement provenant d'un capteur de vitesse angulaire (140) du véhicule ;
de filtrer (304), avec le circuit de diagnostic, le signal de fonctionnement pour générer un signal filtré ;
de convertir (306), avec le circuit de diagnostic, le signal filtré généré en un signal filtré en courant continu ; et
de déterminer, avec le circuit de diagnostic, si un événement de dysfonctionnement se produit dans le moteur sur la base de la comparaison d'une crête de signal du signal filtré en courant continu à un seuil de référence et de générer un signal de déclenchement en réponse à la détermination (312) du fait que la crête de signal est supérieure au seuil de référence,
**caractérisé en ce que** le filtrage du signal de fonctionnement comprend le filtrage du signal de fonctionnement en utilisant un filtre passe-bande Butterworth du huitième ordre ayant une fréquence de coupure élevée d'environ 35 Hertz et une fréquence de coupure basse d'environ 5 Hertz.

8. Procédé de la revendication 7, dans lequel la réception du signal de fonctionnement comprend la réception d'une vitesse angulaire indiquant une vitesse angulaire d'un volant d'inertie d'un moteur du véhicule fonctionnant à un régime de moteur compris entre 1500 révolutions par minute et 2000 révolutions par minute.

9. Procédé de la revendication 7, dans lequel la conversion du signal filtré généré comprend la conversion du signal filtré généré en utilisant un convertisseur de courant alternatif en courant continu à valeur efficace vraie.

10. Procédé de la revendication 7, comprenant en outre l'activation (316) d'une alarme en réponse à la détermination du fait qu'un événement de dysfonctionnement se produit.

11. Procédé de la revendication 7, dans lequel le fait de déterminer si un événement de dysfonctionnement se produit comprend le fait de déterminer si le moteur présente des ratés d'allumage.
